# EUROPEAN PATENT SPECIFICATION

(11) **EP 3 032 304 B1**
(45) Date of publication and mention of the grant of the patent: **28.11.2018**
(21) Application number: 15198132.1
(22) Date of filing: 04.12.2015
(51) Int. Cl.: G02B 6/44

(54) **PRE-CABLED TELECOMMUNICATIONS ASSEMBLY**
VORVERKABELTE TELEKOMMUNIKATIONSANORDNUNG
ENSEMBLE DE TÉLÉCOMMUNICATION PRÉ-CÂBLÉ

(30) Priority: 05.12.2014 US 201462088288 P
(43) Date of publication of application: 15.06.2016
(73) Proprietor: CommScope Connectivity Belgium BVBA, 3010 Kessel-Lo (BE)
(72) Inventor: VERMEULEN, Pieter, 2260 Westerlo (BE); GEENS, Johan, 3380 Bunsbeek (BE)
(74) Representative: Murgitroyd & Company

(56) References cited:
- EP-A2- 0 408 266
- WO-A1-2005/026800
- WO-A1-2014/173930
- GB-A- 2 287 796
- US-A- 4 792 203
- US-A1- 2015 117 829

## Description

### TECHNICAL FIELD

Telecommunications assemblies and sub-assemblies with factory provided cabling or fibers are disclosed.

### BACKGROUND

Telecommunications assemblies having factory provided cabling or fibers (i.e. pre-fibered, pre-wired, pre-cabled, etc.) are known. For example, a length of a trunk cable can be provided that is connected to a telecommunications subassembly at the factory. In some instances, the trunk cable houses multiple fiber optic cables and a strengthening member to strengthen the cable. However, such strengthening members can substantially reduce the flexibility of the trunk cable. Even trunk cables without strengthening members may be relatively stiff with low flexibility where large numbers of individual cables are present within the trunk cable. It is desirable to improve the interconnection between the trunk cable and the telecommunications subassembly to which the optical fibers of the trunk cable are ultimately connected.
WO2014/173930 A1 discusses a cable mount for fixing a strength member of a fiber optic cable to a fixture. The cable mount includes a front end, a rear end, and a longitudinal channel therebetween, the channel defined by upper and lower transverse walls and a vertical divider wall. The channel receives a portion of the cable. A strength member pocket receives the strength member of the cable, the pocket located on an opposite side of the divider wall from the longitudinal channel, the pocket communicating with the longitudinal channel through an opening on the divider wall. A strength member clamp fixes the strength member of the cable against axial pull. Cable management structures in the form of spools define at least one notch that communicates with the longitudinal channel for guiding optical fibers extending from a jacket either upwardly or downwardly therethrough. The cable mount also allows routing of the optical fibers through the longitudinal channel all the way from the rear end to the front end.
WO 2005/026800 A1 discusses a modulular unit for an optical fibre distribution frame, carrying means for splicing, splitting or terminating the optical fibres and having means defining an opening in a wall thereof through which the optical fibres leading to or from the said unit pass to other such units and/or to or from the said distribution frame, in which the said opening is located towards the rear (or in an alternative, the front) of the unit as seen in use and communicates with a slot in the said wall, which slot is longer than the said opening and extends towards the front (or in an alternative, the rear) of the unit as seen in use and which slot is open at its end remote from the said opening, allowing an intermediate portion of an optical fibre to be laterally introduced into or removed from the opening without requiring an end of the fibre to be passed through the said opening.

### SUMMARY

A pre-cabled telecommunications assembly is disclosed. In one aspect, the assembly includes a flexible conduit extending between a main body of a bracket and a telecommunications subassembly. A trunk cable is also provided which can include a plurality of fibers and a strengthening member disposed within an outer jacket. The trunk cable, proximate an end of the outer jacket, can be mounted to a first end of the bracket main body. In one aspect, the flexible conduit has a first conduit end and a second conduit end and has an inside diameter that is greater than an inside diameter of the trunk cable outer jacket. The flexible conduit is attached to the second end of the bracket main body proximate the first conduit end and is attached to the telecommunications subassembly proximate the second conduit end. The plurality of fibers of the trunk cable extend from the outer jacket end, into the first conduit end, through the second conduit end, and to the telecommunications subassembly. In one example, the trunk cable includes a strengthening member and the bracket includes a clamp that is fastened to the strengthening member and fastened to the bracket main body. In one example, the pre-cabled telecommunications assembly are the bracket are separately mounted to a telecommunications distribution frame.

A variety of additional aspects will be set forth in the description that follows. The aspects can relate to individual features and to combinations of features. It is to be understood that both the foregoing general description and the following detailed description are exemplary and explanatory only and are not restrictive of the broad inventive concepts upon which the embodiments disclosed herein are based.

### DRAWINGS

Figure 1 is a perspective view of a pre-cabled telecommunications assembly having exemplary features of aspects in accordance with the principles of the present disclosure.
Figure 2 is a perspective view of a portion of a telecommunications subassembly and flexible conduit of the pre-cabled telecommunications assembly shown in Figure 1.
Figure 3 is a perspective side view of a bracket of the pre-cabled telecommunications assembly shown in Figure 1.
Figure 4 is a perspective top view of the bracket shown in Figure 4, with cables of the assembly moved to more clearly show a clamp of the bracket.
Figure 5 is a perspective side view of the bracket shown in Figure 4, with cables of the assembly moved to more clearly show a clamp of the bracket.
Figure 6 is a perspective back view of the bracket shown in Figure 4.
Figure 7 is a perspective side view of a second embodiment of a bracket usable with the telecommunications subassembly shown in Figure 1.
Figure 8 is a perspective side view of the bracket shown in Figure 7, with a clamp installed on the bracket.
Figure 9 is a perspective view of a telecommunications system onto which the pre-cabled telecommunications assembly shown in Figure 1 is mounted, with a drawer of the system shown in an extended position.
Figure 10 is a perspective view of a portion of the telecommunications system shown in Figure 9.
Figure 11 is a perspective view of the telecommunications system shown in Figure 9, with the drawer shown in a closed position.
Figure 12 is a perspective view of a pre-cabled telecommunications assembly, with optical fibers in an untwisted state.
Figure 13 is a perspective view of a pre-cabled telecommunications assembly shown in Figure 12, with the optical fibers in a twisted state.

### DETAILED DESCRIPTION

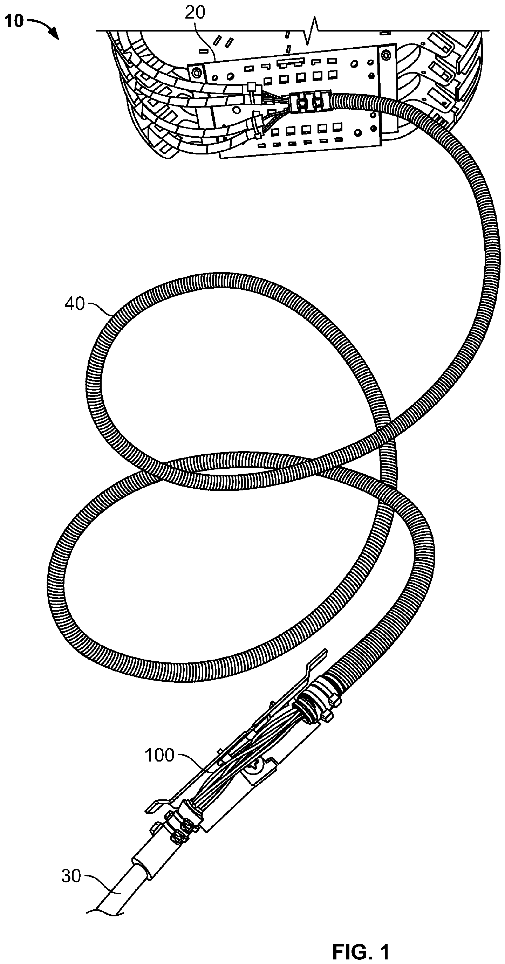

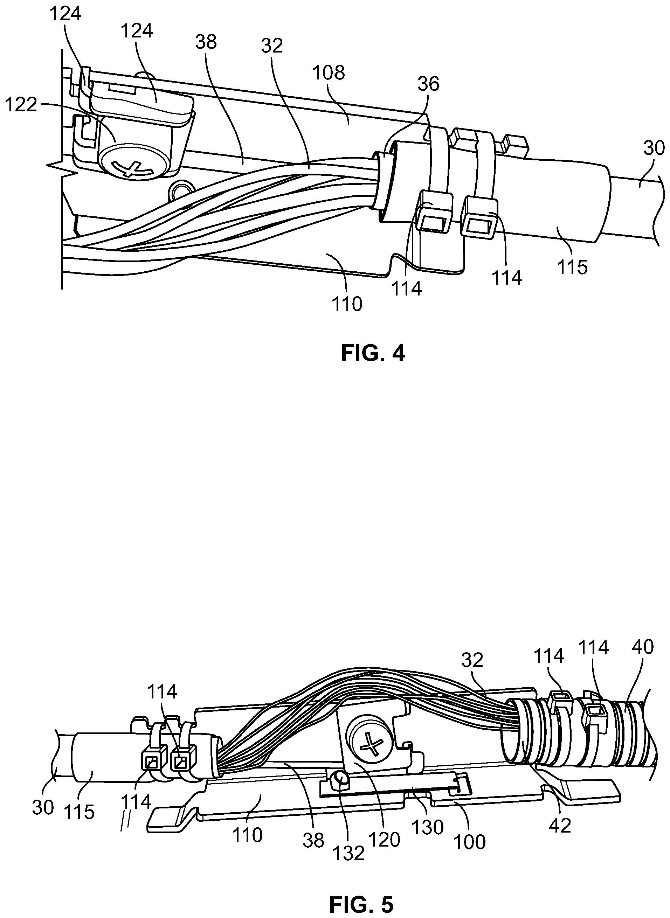

Referring to Figures 1-11, a pre-cabled telecommunications assembly 10 is shown. By the use of the term pre-cabled, it is intended to denote those systems in which a part or all of the telecommunications assembly 10 is provided with cabling at an assembly or manufacturing facility prior to shipment to an installation site. This is in contrast to those systems in which all of the cabling of the system is provided at the installation site.

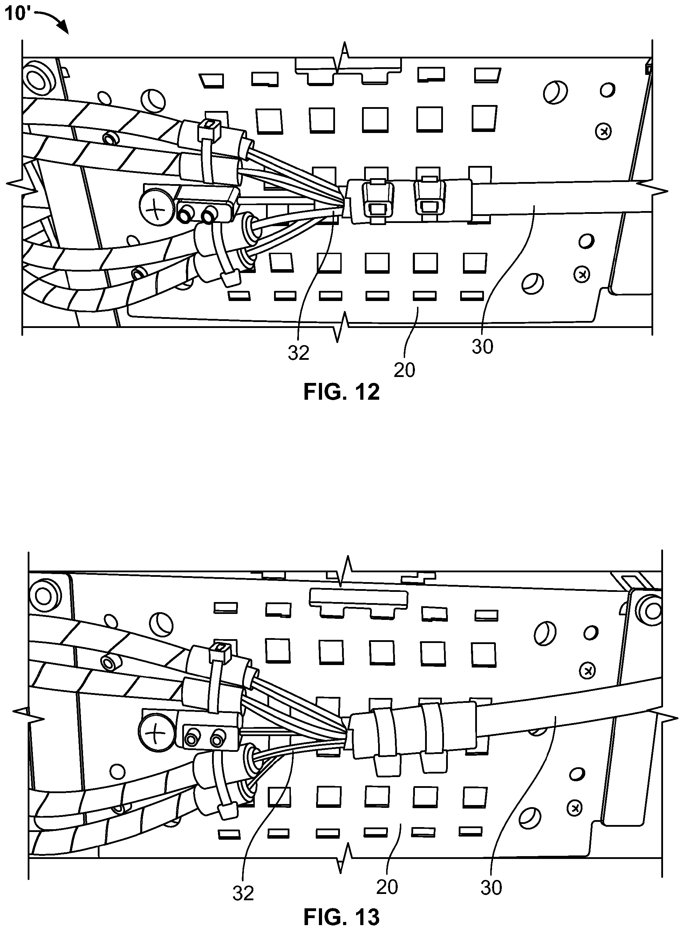

Referring to Figures 12-13, a pre-cabled telecommunications assembly system 10' is shown in which a trunk cable 30 is directly attached to a telecommunications subassembly 20. Trunk cable 30 is provided with an outer jacket 34 within which a plurality of filamentary elements 32, such as optical fibers, are disposed. In such a configuration, especially where the trunk cable 30 is relatively stiff and has low flexibility, it is possible for the trunk cable 30 to twist at the attachment point to the subassembly 20, thereby imparting a corresponding twist and torqueing force onto the individual fiber optic cables 32 extending from the trunk cable 30. This twisted condition is shown at Figure 13 and can significantly reduce optical performance of the cables. Continual and/or repeated twisting movement and torqueing forces can be produced as the telecommunications subassembly 20 is being installed and where the telecommunications subassembly 20 is displaced after installation. The disclosed pre-cabled telecommunications assembly 10 shown in Figures 1-11 advantageously eliminates this condition, thereby improving system performance and durability.

In contrast to the configuration shown in Figures 12-13, the disclosed pre-cabled telecommunications assembly 10 shown in Figures 1-11 utilizes an additional bracket 100 and a flexible conduit 40. This configuration prevents any twisting movement or torqueing of the trunk cable 30 from being exerted onto the individual optical fibers 32 connected to the subassembly 20. In one aspect, the bracket 100 includes a main body 102 extending between a first end 104 and a second end 106. In the example shown, the main body 102 is provided with a first side member 108 and an adjoining second side member 110 that is disposed generally orthogonally with respect to the first side member 108. In one aspect, the first side member 108 is provided with opposing banding notches 112 proximate each of the first and second ends 104, 106. The banding notches 112 are configured to receive and retain attachment bands 114 (e.g. zip ties, clamps, etc.) that are used to secure a first end 42 of the flexible conduit 40 to the main body 102 and to secure an end 36 of the trunk cable outer jacket 34 to the main body 102. As shown, four banding notches 112 are provided at each end 104, 106 to enable two attachment bands 114 to be attached at each end 104, 106. However, more or fewer such notches 112 may be provided without departing from the concepts herein. Sleeves 115 may be provided around the trunk cable 30 and the flexible conduit 40 to aid in distributing the clamping force of the attachment bands 114.

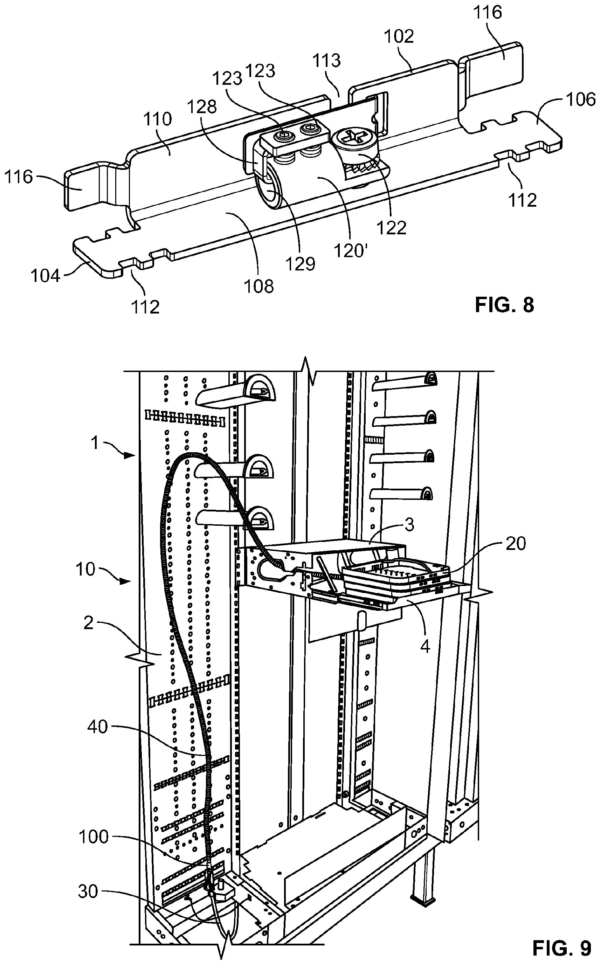

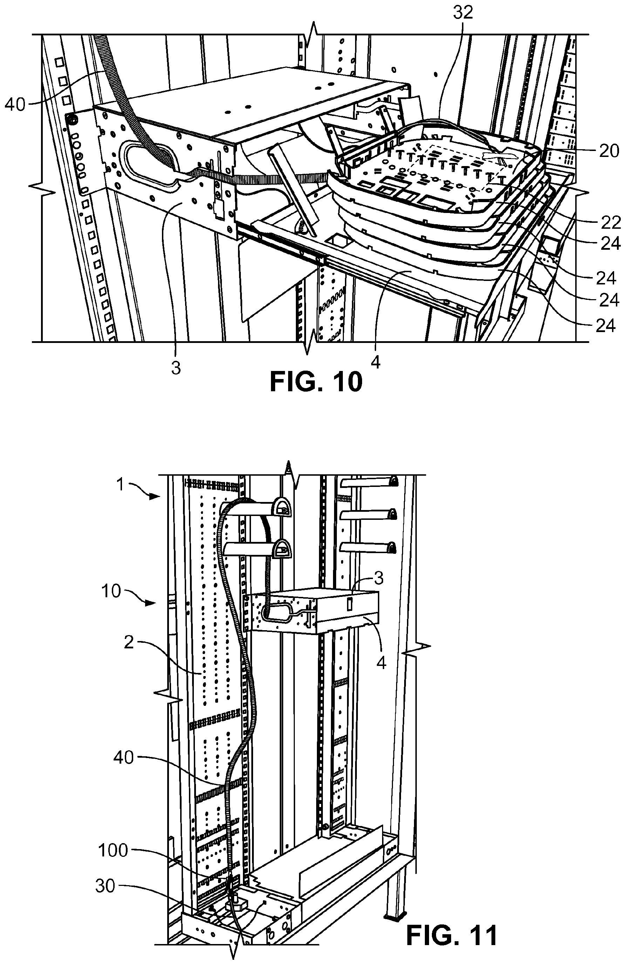

The bracket 100 may also be configured so that the bracket 100 can be mounted to a structure, such as a telecommunications distribution frame 2. For example, the bracket second side member 110 can be provided with a mounting structure 116 at each of the first and second ends 104, 106. As shown, the mounting structures 116 are formed as tabs having free ends 116a that can be inserted into corresponding apertures in the telecommunications distribution frame 2 to secure the bracket to the telecommunications distribution frame 2. As shown, the mounting tabs 116 are offset from the second side member 110 with a bent portion 116b so as to allow the second side member 110 to be adjacent to the structure to which the bracket 100 is mounted, as shown at Figures 9 and 11.

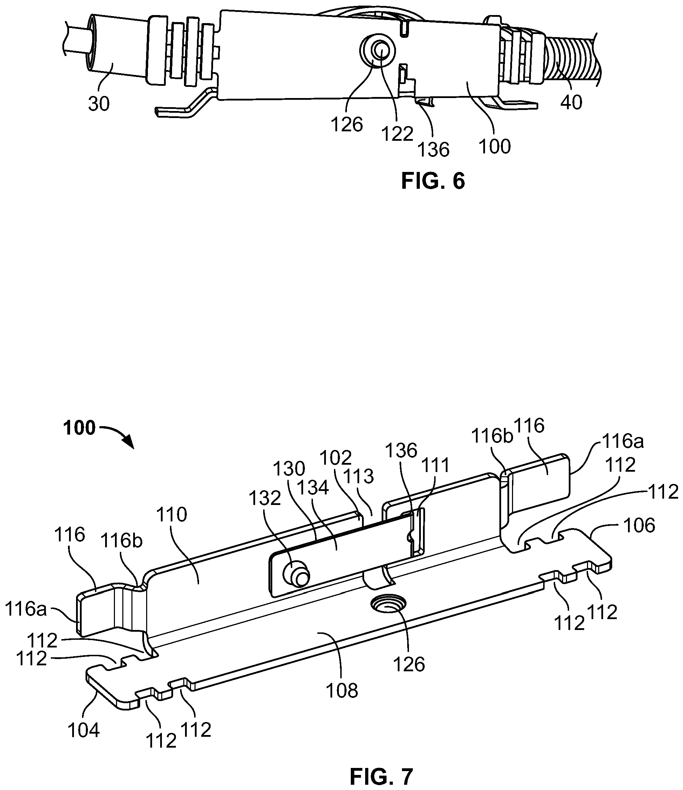

In some applications, the trunk cable 30 is provided with a strengthening member 38. In one example, the strengthening member 38 is a rod, such as a fiberglass rod, that adds tensile strength and stiffness to the trunk cable 30. This allows the trunk cable 30 to sufficiently resist kinking and bending that may be harmful to the optical fibers 32. The trunk cable 30 may also be provided with additional strength members, such as multiple aramid yarns, to improve the tensile strength of the trunk cable 30. Where a strengthening member 38 is provided, the bracket 100 can be further configured with features that engage with and retain the strengthening member 38. For example, and as shown at Figures 1-6, the bracket can be provided with a clamp 120 having a fastener 122 that can be tightened to clamp the strengthening member 38 between plates 124 and/or to the first side member 108 of the bracket 100. As shown, the fastener 122 is threaded into a female threaded aperture 126 in the first side member 108. An alternative style clamp 120' is shown at Figures 7-8, wherein fastener 122 retains the clamp 120' onto the first side member 108 and additional fasteners 123 attached to a clamp member 128 are utilized to secure the strengthening member 38 within a recess 129 of the clamp 120'.

The bracket 100 can also be provided with a retention member or clip 130 to aid in securing the bracket 100 to the frame 2. As shown, the retention member 130 is fastened to the second side member 110 of the bracket main body 102 via a fastener 132. Fastener 132 is shown as a rivet, but may be any other type of suitable fastener, such as a screw or bolt. Alternatively, the retention member 130 may be formed integrally to the bracket main body 102. In one aspect, the retention member 130 has a main body 134 and an adjoining clip portion 136 extending generally orthogonally from the main body 134. The clip portion 136 extends through an aperture 111 in the second side member 110 and is thus capable of extending into and engaging with an aperture within the frame 2 to prevent the bracket 100 from being moved towards the first or second end 104, 106 once engaged. The main body 134 is flexible to the extent that the main body 134 can bend when a force is applied at the end proximate the clip portion 136 to disengage the clip portion 136 from the frame 2.

During installation of the bracket 100, the retention tab 116 proximate the second end 106 can be fully inserted into an opening in the frame 2, at which point the retention tab 116 proximate the first end 104 can be inserted into another opening in the frame 2. In this position, the clip portion 136 will not be aligned with any aperture in the frame 2 and will simply deflect away from the frame 2 through bending of the main body 134. Once this position is achieved, the bracket 100 can be further displaced towards the first end 104 until the clip portion 136 snaps into the corresponding aperture in the frame 2. At this point, the bracket 100 is prevented from any further displacement towards the first or second ends 104, 106 and is thus locked to the frame 2. This locked position is maintained until the clip portion 136 is lifted away from the aperture in the frame 2 by bending or deflecting the main body 134 of the retention member 130. In the exemplary embodiment shown, a slot 113 is provided in the second side member 110 to allow an operator to access the side of the main body 134 facing the frame 2. Thus the slot 113 better enables the operator to use a tool, such as a screwdriver, to deflect the main body 134 away from the frame 2.

From the bracket 100, the flexible conduit 40 extends towards a second end 44 which is connected to a mounting plate 26 of the telecommunications subassembly 20 by additional attachment bands 114 extending through apertures 28 in the mounting plate 26. The flexible conduit 40 includes a tubular construction. In one embodiment, the tubular construction is substantially closed in a 360-degree surrounding of the internal optical fibers 32. In one embodiment, the tubular construction is continuous in cross-section along the full length of flexible conduit 40. The tubular construction can have corrugations or other shapes to allow for flexibility and fiber protection from bending excessively or kinking. In comparison to the trunk cable 30, the flexible conduit has a greater degree of flexibility, especially where a strengthening member 38 is provided in the trunk cable 30. Additionally, the flexible conduit 40 is provided with an internal diameter D2 that is greater than an internal diameter D1 of the trunk cable outer jacket 34. This larger diameter D2 allows for the optical fibers 32 to be routed through the flexible conduit 40 with a greater degree of spacing between the optical fibers 32. Additionally, as there is no actual connection between the flexible conduit 40 and the optical fibers 32, any twisting, rotation, and/or torqueing of the flexible conduit 40 does not impart a similar force onto the optical fibers 32.

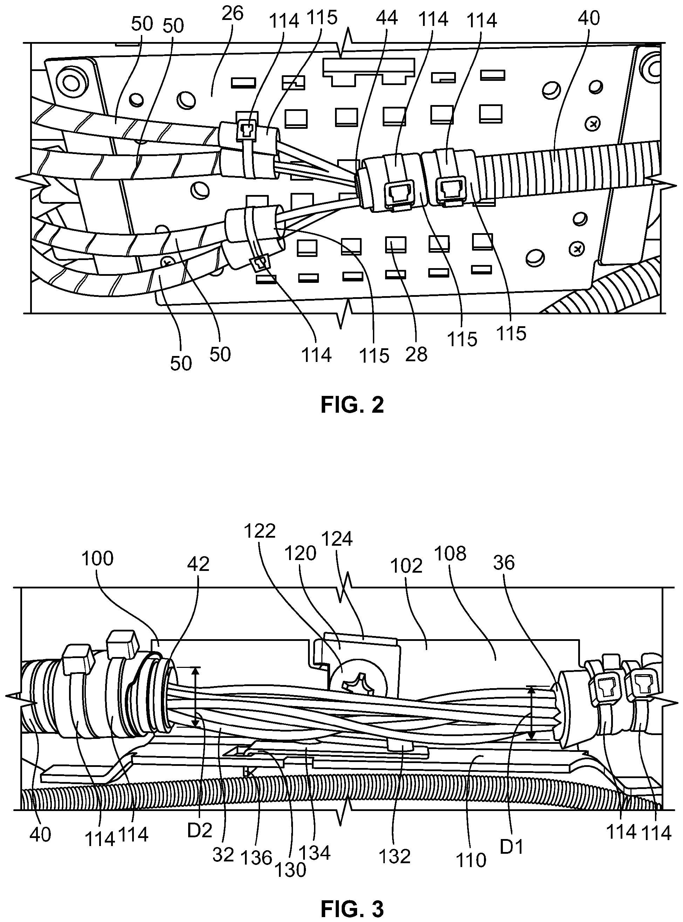

As most easily seen at Figure 2, the optical fibers 32 extend from the second end 44 of the flexible conduit 40 and are divided into multiple branches that are then routed to individual telecommunications components 22 supported by the telecommunications subassembly 20. Non-limiting examples of telecommunications components 22 are telecommunications cables, connectivity equipment, splices, splitters, wave division multiplexers, and terminations. The optical fibers 32 can either be pre-terminated at the factory with connectors or can be left with bare ends for later connection to field installed components 22. Alternatively, the components 22 can be factory installed and provided as part of the pre-cabled telecommunications assembly 10. As shown, each branch of optical fibers 32 is routed through a flexible branch conduit 50 which is also secured by attachment bands 114 to the back plate 26 of the telecommunications subassembly 20. Each flexible branch conduit 50 is routed to a structure that holds one or more telecommunications components 22, for example a tray 24. It is noted that, in certain applications, the telecommunications subassembly 20 need not includes multiple branch conduits 50 and can instead be provided with a single conduit 50 that receives all of the optical fibers 32 from the trunk cable 30.

Referring to Figures 9-11, a telecommunications system 1 is presented which includes the above described pre-cabled telecommunications assembly 10. As shown, the telecommunications system is provided having a frame 2 to which a cabinet 3 having a drawer 4 is attached. The bracket 100 of the pre-cabled telecommunications assembly 10 is shown as being mounted to the frame 2 via the mounting structures 116 which can be inserted into apertures within the frame 2. Once attached, any bending or torqueing forces caused by the trunk cable 30 will be transferred to the bracket 100 and frame 2, thereby isolating these forces from the flexible conduit 40 and the optical fibers 32. The telecommunications subassembly 20 is shown as being supported by the drawer 4 of the telecommunications frame 2. Thus, the flexible conduit 40 extends from the bracket 100, along the frame 2, and up to the cabinet 3. As the flexible conduit 40 is relatively flexible, any movement of the telecommunications subassembly 20 caused by the extension and retraction of the drawer is easily accommodated by flexion of the flexible conduit 40 without imparting undue forces onto the optical fibers 32.

The disclosed pre-cabled telecommunications subassembly 10 and system 1 can be manufactured and/or installed utilizing the methods described herein. It is noted that although the steps are described in a particular order, the described procedures are not necessarily intended to be limited to being performed in the shown order. Rather at least some of the steps may be performed in an overlapping manner, in a different order and/or simultaneously. In one example, a method of making a pre-cabled telecommunications subassembly (10) includes providing a length of a trunk cable (30) having a plurality of optical fibers (32) within an outer jacket (34) and stripping a portion of the outer jacket (34) from the trunk cable (30) to expose the optical fibers (32) and to create an outer jacket end (36). The method may also include securing the trunk cable (30) proximate the outer jacket end (36) to a first end of a bracket (100) and routing the optical fibers (32) through a flexible conduit (40) having a first end (42) and a second end (44). One step of the method may be securing the flexible conduit (40) proximate the first end (42) to a second end of the bracket (100) while another step may be securing the flexible conduit (40) proximate the second end (44) to a telecommunications subassembly (20). Yet another step may be routing the optical fibers (32) from the second end (44) of the flexible conduit to the telecommunications subassembly (20).

A method of installing a pre-cabled telecommunications assembly (10) can also be implemented. The method may include providing a pre-cabled telecommunications assembly (10) including a trunk cable (30) secured to a bracket (100), and including a flexible conduit (40) secured to the bracket (100) and to a telecommunications subassembly (20), wherein optical fibers (32) of the trunk cable (30) are routed through the flexible conduit (40) to the telecommunications subassembly (20). The method may also include securing the bracket (100) to a frame (2) of a telecommunications distribution system (1) and mounting the telecommunications subassembly (20) to a portion of the telecommunications distribution system (1) that is connected to the frame. Optionally, the method can install a telecommunications component (22) within the telecommunications subassembly (20); and connecting at least one of the optical fibers (32) to the telecommunications component (22).

Various modifications and alterations of this disclosure will become apparent to those skilled in the art without departing from the scope of this disclosure, and it should be understood that the scope of this disclosure is not to be unduly limited to the illustrative embodiments set forth herein.

**PARTS LIST**

| | | | |
|---|---|---|---|
| 1 | telecommunications system | 106 | second end |
| 2 | telecommunications frame | 108 | first side member |
| 3 | cabinet | 110 | second side member |
| 4 | drawer | 112 | banding notches |
| 10 | telecommunications assembly | 114 | attachment bands |
| 20 | telecommunications subassembly | 115 | sleeves |
| | | 116 | mounting structures |
| 22 | telecommunications component | 116a | bent portion |
| | | 120 | clamp |
| 24 | trays | 120' | clamp |
| 26 | plate | 122 | fastener |
| 28 | apertures | 123 | fasteners |
| 30 | trunk cable | 124 | clamp plates |
| 32 | fibers | 126 | aperture |
| 34 | outer jacket | 128 | clamp recess |
| 36 | jacket end | 129 | recess |
| 38 | strengthening member | 130 | retention member |
| 40 | flexible conduit | 132 | fastener |
| 42 | first conduit end | 134 | main body |
| 44 | second conduit end | 136 | clip portion |
| 50 | branch conduits | D1 | trunk cable jacket inner diameter |
| 100 | bracket | | |
| 102 | main body | D2 | flexible conduit inner diameters |
| 104 | first end | | |

## Claims

1. A pre-cabled telecommunications assembly (10) comprising:
a. a telecommunications subassembly (20) configured to support at least one telecommunications component (22);
b. a bracket (100) having a main body (102) extending between a first end (104) and a second end (106); and
c. a trunk cable (30) including a plurality of optical fibers (32) extending within and beyond an end (36) of an outer jacket (34), wherein the end (36) of the outer jacket (34) is secured to the first end (104) of the bracket main body (102);
**characterized by**:
d. a flexible conduit (40) extending between a first conduit end (42) and a second conduit end (44), the flexible conduit (40) having an inside diameter (D2) that is greater than an inside diameter (D1) of the trunk cable outer jacket (34), the first conduit end (42) being secured to the second end (106) of the bracket main body (102), the second conduit end (44) being secured to the telecommunications subassembly (20), wherein the plurality of fibers (32) extend from the outer jacket end (36) of the trunk cable (30), into the first conduit end (42), through the second conduit end (44), and to the telecommunications subassembly (20).

2. The pre-cabled telecommunications assembly (10) according to claim 1, wherein the trunk cable (30) further includes a strengthening member (38) and the bracket (100) includes a clamp (120) fastened to the strengthening member (38) and to the bracket main body (102).

3. The pre-cabled telecommunications assembly (10) according to claim 1 or 2, wherein a first portion of the plurality of fibers (32) extends from the second conduit end (44) and through a first branch conduit (50) that is mounted to the telecommunications subassembly (20) and a second portion of the plurality of fibers (32) extends from the second conduit end (44) and through a second branch conduit (50) that is mounted to the telecommunications subassembly (20).

4. The pre-cabled telecommunications assembly (10) according to any of the above claims, wherein attachment bands (114) are provided to secure the trunk cable (30) to the bracket (100) and to secure the flexible conduit (40) to the bracket (100).

5. The pre-cabled telecommunications assembly (10) of claim 4, wherein the bracket (100) is provided with banding notches (112) for receiving and retaining the attachment bands (114) onto the bracket (100).

6. The pre-cabled telecommunications assembly (10) according to any of the above claims, wherein bracket (100) is provided with a mounting structure (116) for securing the bracket (100) to a telecommunications frame (2).

7. The pre-cabled telecommunications assembly (10) according to claim 6, further including a retention member (130) for locking the bracket (100) to the telecommunications frame (2).

8. The pre-cabled telecommunications assembly (10) according to claim 7, wherein the retention member (130) is mechanically fastened to the bracket main body (102).

9. The pre-cabled telecommunications assembly (10) according to claim 8, wherein the retention member (130) includes a main body (134) fastened to a side member (110) of the bracket main body (102) and a clip portion (136) extending through an opening (111) in the side member (110).

10. The pre-cabled telecommunications assembly according to any of the above claims, wherein the bracket main body (102) includes a first side member (108) and an adjoining second side member (110) extending generally orthogonally from the first side member (108).

11. The pre-cabled telecommunications assembly according to claim 10, wherein the first side member (108) is provided with a plurality of banding notches (112) configured for receiving and retaining attachment bands (114) securing the trunk cable (30) and the flexible conduit (40) onto the bracket (100), and wherein the second side member (110) is provided with a retention member (130) for locking the bracket (100) to the telecommunications frame (2).

12. A telecommunications system (1) comprising:
a. a telecommunications frame (2); and
b. a pre-cabled telecommunications assembly (10) according to any of the above claims, wherein the telecommunications subassembly (20) and the bracket (100) are mounted to the telecommunications frame.

13. The telecommunications system (1) according to claim 12, wherein the pre-cabled telecommunications assembly (10) includes a drawer (4) supporting a plurality of trays (24).

14. A method of installing a pre-cabled telecommunications assembly (10) according to any of the above claims, comprising:
a. providing the pre-cabled telecommunications assembly (10);
b. securing the bracket (100) to a frame (2) of a telecommunications distribution system (1); and
c. mounting the telecommunications subassembly (20) to a portion of the telecommunications distribution system (1) that is connected to the frame.

15. The method of installing a pre-cabled telecommunications assembly (10) according to claim 14, further comprising:
a. installing a telecommunications component (22) within the telecommunications subassembly (20); and
b. connecting at least one of the optical fibers (32) to the telecommunications component (22).

## Patentansprüche

1. Eine vorverkabelte Telekommunikationsanordnung (10), die Folgendes beinhaltet:
a. eine Telekommunikationsunteranordnung (20), die konfiguriert ist, um mindestens eine Telekommunikationskomponente (22) zu tragen;
b. eine Halterung (100), die einen Hauptkörper (102) aufweist, der sich zwischen einem ersten Ende (104) und einem zweiten Ende (106) erstreckt; und
c. ein Verbindungskabel (30), das eine Vielzahl von optischen Fasern (32) umfasst, die sich innerhalb eines Endes (36) eines Außenmantels (34) und darüber hinaus erstrecken, wobei das Ende (36) des Außenmantels (34) an dem ersten Ende (104) des Halterungshauptkörpers (102) gesichert ist;
**gekennzeichnet durch**:
d. einen flexiblen Schlauch (40), der sich zwischen einem ersten Schlauchende (42) und einem zweiten Schlauchende (44) erstreckt, wobei der flexible Schlauch (40) einen Innendurchmesser (D2) aufweist, der größer als ein Innendurchmesser (D1) des Verbindungskabelsaußenmantels (34) ist, wobei das erste Schlauchende (42) an dem zweiten Ende (106) des Halterungshauptkörpers (102) gesichert ist, wobei das zweite Schlauchende (44) an der Telekommunikationsunteranordnung (20) gesichert ist, wobei sich die Vielzahl von Fasern (32) von dem Außenmantelende (36) des Verbindungskabels (30) in das erste Schlauchende (42), durch das zweite Schlauchende (44) und zu der Telekommunikationsunteranordnung (20) erstreckt.

2. Vorverkabelte Telekommunikationsanordnung (10) gemäß Anspruch 1, wobei das Verbindungskabel (30) ferner ein Verstärkungsglied (38) umfasst und die Halterung (100) eine Klemme (120) umfasst, die an dem Verstärkungsglied (38) und an dem Halterungshauptkörper (102) festgemacht ist.

3. Vorverkabelte Telekommunikationsanordnung (10) gemäß Anspruch 1 oder 2, wobei sich ein erster Abschnitt der Vielzahl von Fasern (32) von dem zweiten Schlauchende (44) und durch einen ersten Zweigschlauch (50), der an der Telekommunikationsunteranordnung (20) montiert ist, erstreckt, und sich ein zweiter Abschnitt der Vielzahl von Fasern (32) von dem zweiten Schlauchende (44) und durch einen zweiten Zweigschlauch (50), der an der Telekommunikationsunteranordnung (20) montiert ist, erstreckt.

4. Vorverkabelte Telekommunikationsanordnung (10) gemäß einem der vorhergehenden Ansprüche, wobei Befestigungsbänder (114) bereitgestellt sind, um das Verbindungskabel (30) an der Halterung (100) zu sichern und den flexiblen Schlauch (40) an der Halterung (100) zu sichern.

5. Vorverkabelte Telekommunikationsanordnung (10) gemäß Anspruch 4, wobei die Halterung (100) mit Bänderungskerben (112) zum Aufnehmen und Festhalten der Befestigungsbänder (114) auf der Halterung (100) bereitgestellt ist.

6. Vorverkabelte Telekommunikationsanordnung (10) gemäß einem der vorhergehenden Ansprüche, wobei die Halterung (100) mit einer Montagestruktur (116) zum Sichern der Halterung (100) an einem Telekommunikationsrahmen (2) bereitgestellt ist.

7. Vorverkabelte Telekommunikationsanordnung (10) gemäß Anspruch 6, die ferner ein Rückhalteglied (130) zum Verriegeln der Halterung (100) an dem Telekommunikationsrahmen (2) umfasst.

8. Vorverkabelte Telekommunikationsanordnung (10) gemäß Anspruch 7, wobei das Rückhalteglied (130) an dem Halterungshauptkörper (102) mechanisch festgemacht ist.

9. Vorverkabelte Telekommunikationsanordnung (10) gemäß Anspruch 8, wobei das Rückhalteglied (130) einen Hauptkörper (134) umfasst, der an einem seitlichen Glied (110) des Halterungshauptkörpers (102) und einem Klammerabschnitt (136), der sich durch eine Öffnung (111) in dem seitlichen Glied (110) erstreckt, festgemacht ist.

10. Vorverkabelte Telekommunikationsanordnung gemäß einem der vorhergehenden Ansprüche, wobei der Halterungshauptkörper (102) ein erstes seitliches Glied (108) und ein angrenzendes zweites seitliches Glied (110), das sich generell orthogonal von dem ersten seitlichen Glied (108) erstreckt, umfasst.

11. Vorverkabelte Telekommunikationsanordnung (10) gemäß Anspruch 10, wobei das erste seitliche Glied (108) mit einer Vielzahl von Bänderungskerben (112) bereitgestellt ist, die zum Aufnehmen und Festhalten von Befestigungsbändern (114), die das Verbindungskabel (30) und den flexiblen Schlauch (40) auf der Halterung (100) sichern, konfiguriert sind, und wobei das zweite seitliche Glied (110) mit einem Rückhalteglied (130) zum Verriegeln der Halterung (100) an dem Telekommunikationsrahmen (2) bereitgestellt ist.

12. Ein Telekommunikationssystem (1), das Folgendes beinhaltet:
a. einen Telekommunikationsrahmen (2); und
b. eine vorverkabelte Telekommunikationsanordnung (10) gemäß einem der vorhergehenden Ansprüche, wobei die Telekommunikationsunteranordnung (20) und die Halterung (100) an dem Telekommunikationsrahmen montiert sind.

13. Telekommunikationssystem (1) gemäß Anspruch 12, wobei die vorverkabelte Telekommunikationsanordnung (10) eine Lade (4) umfasst, die eine Vielzahl von Einsätzen (24) trägt.

14. Ein Verfahren zum Installieren einer vorverkabelten Telekommunikationsanordnung (10) gemäß einem der vorhergehenden Ansprüche, das Folgendes beinhaltet:
a. Bereitstellen der vorverkabelten Telekommunikationsanordnung (10);
b. Sichern der Halterung (100) an einem Rahmen (2) eines Telekommunikationsverteilungssystems (1); und
c. Montieren der Telekommunikationsunteranordnung (20) an einen Abschnitt des Telekommunikationsverteilungssystems (1), das mit dem Rahmen verbunden ist.

15. Verfahren zum Installieren einer vorverkabelten Telekommunikationsanordnung (10) gemäß Anspruch 14, das ferner Folgendes beinhaltet:
a. Installieren einer Telekommunikationskomponente (22) innerhalb der Telekommunikationsunteranordnung (20); und
b. Verbinden von mindestens einer der optischen Fasern (32) mit der Telekommunikationskomponente (22).

## Revendications

1. Un ensemble de télécommunications pré-câblé (10) comprenant :
a. un sous-ensemble de télécommunications (20) configuré pour prendre en charge au moins un composant de télécommunications (22) ;
b. une bride (100) ayant un corps principal (102) s'étendant entre une première extrémité (104) et une deuxième extrémité (106) ; et
c. un câble principal (30) incluant une pluralité de fibres optiques (32) s'étendant à l'intérieur et au-delà d'une extrémité (36) d'une gaine extérieure (34), l'extrémité (36) de la gaine extérieure (34) étant assujettie à la première extrémité (104) du corps principal de bride (102) ;
**caractérisé par** :
d. un conduit flexible (40) s'étendant entre une première extrémité de conduit (42) et une deuxième extrémité de conduit (44), le conduit flexible (40) ayant un diamètre intérieur (D2) qui est supérieur à un diamètre intérieur (D1) de la gaine extérieure de câble principal (34), la première extrémité de conduit (42) étant assujettie à la deuxième extrémité (106) du corps principal de bride (102), la deuxième extrémité de conduit (44) étant assujettie au sous-ensemble de télécommunications (20), dans lequel la pluralité de fibres (32) s'étend à partir de l'extrémité de gaine extérieure (36) du câble principal (30), jusque dans la première extrémité de conduit (42), à travers la deuxième extrémité de conduit (44), et jusqu'au sous-ensemble de télécommunications (20).

2. L'ensemble de télécommunications pré-câblé (10) selon la revendication 1, dans lequel le câble principal (30) inclut en sus un élément de renforcement (38) et la bride (100) inclut un dispositif de serrage (120) fixé à l'élément de renforcement (38) et au corps principal de bride (102).

3. L'ensemble de télécommunications pré-câblé (10) selon la revendication 1 ou la revendication 2, dans lequel une première partie de la pluralité de fibres (32) s'étend à partir de la deuxième extrémité de conduit (44) et à travers un premier conduit de branche (50) qui est monté sur le sous-ensemble de télécommunications (20) et une deuxième partie de la pluralité de fibres (32) s'étend à partir de la deuxième extrémité de conduit (44) et à travers un deuxième conduit de branche (50) qui est monté sur le sous-ensemble de télécommunications (20).

4. L'ensemble de télécommunications pré-câblé (10) selon n'importe lesquelles des revendications ci-dessus, dans lequel des bandes d'attache (114) sont fournies pour assujettir le câble principal (30) à la bride (100) et pour assujettir le conduit flexible (40) à la bride (100).

5. L'ensemble de télécommunications pré-câblé (10) de la revendication 4, dans lequel la bride (100) est pourvue d'entailles de cerclage (112) pour recevoir et retenir les bandes d'attache (114) sur la bride (100).

6. L'ensemble de télécommunications pré-câblé (10) selon n'importe lesquelles des revendications ci-dessus, dans lequel la bride (100) est pourvue d'une structure de montage (116) pour assujettir la bride (100) à un cadre de télécommunications (2).

7. L'ensemble de télécommunications pré-câblé (10) selon la revendication 6, incluant en sus un élément de retenue (130) pour verrouiller la bride (100) sur le cadre de télécommunications (2).

8. L'ensemble de télécommunications pré-câblé (10) selon la revendication 7, dans lequel l'élément de retenue (130) est fixé mécaniquement au corps principal de bride (102).

9. L'ensemble de télécommunications pré-câblé (10) selon la revendication 8, dans lequel l'élément de retenue (130) inclut un corps principal (134) fixé à un élément latéral (110) du corps principal de bride (102) et une partie agrafe (136) s'étendant à travers une ouverture (111)dans l'élément latéral (110).

10. L'ensemble de télécommunications pré-câblé selon n'importe lesquelles des revendications ci-dessus, dans lequel le corps principal de bride (102) inclut un premier élément latéral (108) et un deuxième élément latéral adjacent (110) s'étendant de façon généralement orthogonale à partir du premier élément latéral (108).

11. L'ensemble de télécommunications pré-câblé selon la revendication 10, dans lequel le premier élément latéral (108) est pourvu d'une pluralité d'entailles de cerclage (112) configurées pour recevoir et retenir des bandes d'attaches (114) assujettissant le câble principal (30) et le conduit flexible (40) sur la bride (100), et dans lequel le deuxième élément latéral (110) est pourvu d'un élément de retenue (130) pour verrouiller la bride (100) sur le cadre de télécommunications (2).

12. Un système de télécommunications (1) comprenant :
a. un cadre de télécommunications (2) ; et
b. un ensemble de télécommunications pré-câblé (10) selon n'importe lesquelles des revendications ci-dessus, dans lequel le sous-ensemble de télécommunications (20) et la bride (100) sont montés sur le cadre de télécommunications.

13. Le système de télécommunications (1) selon la revendication 12, dans lequel l'ensemble de télécommunications pré-câblé (10) inclut un tiroir (4) supportant une pluralité de plateaux (24).

14. Un procédé d'installation d'un ensemble de télécommunications pré-câblé (10) selon n'importe lesquelles des revendications ci-dessus, comprenant :
a. la fourniture de l'ensemble de télécommunications pré-câblé (10) ;
b. l'assujettissement de la bride (100) à un cadre (2) d'un système de distribution de télécommunications (1) ; et
c. le montage du sous-ensemble de télécommunications (20) sur une partie du système de distribution de télécommunications (1) qui est connectée au cadre.

15. Le procédé d'installation d'un ensemble de télécommunications pré-câblé (10) selon la revendication 14, comprenant en sus :
a. l'installation d'un composant de télécommunications (22) à l'intérieur du sous-ensemble de télécommunications (20) ; et
b. la connexion d'au moins une des fibres optiques (32) au composant de télécommunications (22).
